# EUROPEAN PATENT SPECIFICATION

(11) **EP 2 434 704 B1**
(45) Date of publication and mention of the grant of the patent: **22.05.2013**
(21) Application number: 11188224.7
(22) Date of filing: 25.09.2008
(51) Int. Cl.: H04L 29/08, H04L 12/751, H04L 12/721, H04L 12/711, H04L 12/747, H04L 12/801

(54) **Method and system for choosing backup resources**
Verfahren und System zur Auswahl von Back-up-ressourcen
Procédé et système de sélection de ressources de sauvegarde

(30) Priority: 26.09.2007 CN 200710122463
(43) Date of publication of application: 28.03.2012
(62) Divisional of application: 08834634.1
(73) Proprietor: Huawei Technologies Co., Ltd., Longgang District, Shenzhen Guangdong 518129 (CN)
(72) Inventor: Jiang, Haifeng, Shenzhen Guangdong 518129 (CN); Li, Feng, Shenzhen Guangdong 518129 (CN); Jiang, Xingfeng, Shenzhen Guangdong 518129 (CN); Han, Lei, Shenzhen Guangdong 518129 (CN)
(74) Representative: Kreuz, Georg Maria

(56) References cited:
- US-A1- 2005 091 399
- US-A1- 2005 102 393

## Description

### Field of the Invention

The present invention relates to communications, and in particular, to a method and system for choosing backup resources.

### Background of the Invention

A Peer to Peer (P2P) network is a distributed network, where participants share some hardware resources they own (e.g. processing capabilities, storage capabilities, network connection capabilities, printers). The shared resources can be accessed by other peer nodes through the services and contents provided by the network without the need of any intermediate entity. The participants in the network are both providers of resources (service and content) and consumers of resources (service and content). P2P breaks the traditional Client/Server (C/S) model so that all nodes in a network are peers. A node is both a server that provides services for other nodes and a client that enjoys services provided by other nodes. P2P fully uses the capabilities of every node in a system to provide mutual services, thus increasing the utilization of the nodes and improving the performance of the network, devices and information services.

In a structured P2P system, the publication of resources is closely related to the network topology, and resources are distributed in the network precisely according to the logical addresses in the P2P topology. In the system, every node has a virtual logical address and all nodes make up a relatively stable and close topology according to their addresses. In the structured P2P system, a value generated by a Hash operation on a resource is a resource mark value, indicated by a key. The name space of keys is mapped to the name space of nodes; that is, one key corresponds to one node. Resources are distributed in the structured P2P system according to the mapping between keys and nodes so that resources can be found according to the corresponding keys.

In the structured P2P system, each node stores a section of a key space, which is calculated according to a Distributed Hash Table (DHT). The key space varies with the DHT algorithm. For example, according to the chord algorithm, if node A and node B are neighbors and the ID of node A is smaller than the ID of node B, the key space managed by node A is made up of the keys in the numeral space from node A ID to node B ID.

DHT algorithms include chord and pastry, providing key based resource search in a structured P2P network. A root is found according to a key, and the resource corresponding to the key is obtained or stored at the root.

When a packet is routed in a structured P2P system, the path corresponding to a key (related to destination node) in the packet is determined according to the key and a certain algorithm, and the packet is routed to the destination node by a number of intermediate nodes with a gradual approaching method.

The routing table on a node in a P2P overlay network is calculated and searched out according to the DHT algorithms. Taking the chord algorithm as an example, the routing table on a node is shown in Table 1.

**Table 1**

| **No.** | **Node ID** | **IP Address** |
|---|---|---|
| 1 | X | 66.249.67.150 |
| 2 | Y | 66.249.67.151 |
| 3 | z | 66.249.67.152 |
| ... | ... | ... |
| N | n | 66.249.67.n |

In the chord algorithm, when a node is routing a packet, the node finds a proximate node ID from its routing table according to the key in the packet and forwards the packet to the node corresponding to the node ID. Every node routes the packet by following this rule until the packet arrives at the destination node (whose node ID is the key).

However, in a P2P overlay system, the processing capability of each node varies and packets with different keys will be routed via different numbers of hops. As a result, some nodes in the P2P overlay system will process more packets while other nodes will process fewer packets. Nodes that process large numbers of packets and those with weak processing capabilities may fail to provide enough capabilities, which causes congestion in the P2P overlay system and as a result, subsequent packets will not be forwarded or processed.

To avoid congestion in the P2P overlay system, the prior art provides a path choosing method as follows:
(1) Before sending packets to a destination node, a sending node (source node) sends a congestion detection packet to the destination node.
(2) After an intermediate node receives the congestion detection packet, if congestion occurs, the intermediate node sets the Explicit Congestion Notification (ECN) of the congestion detection packet as 1 and forwards the congestion detection packet to the destination node.
(3) The destination node sends a congestion notification to the sending node, where the notification carries congestion information of the intermediate node, notifying the sending node that the path is congested.
(4) Upon reception of the congestion notification, the sending node chooses another path instead of the path.

In the routing table of a node in the P2P overlay system, the node may choose a next hop from k available nodes. Among the k nodes, one is the proximate node searched out via DHT and other nodes are all adjacent to the proximate node. If the congestion notification shows that the proximate node is congested, the sending node chooses one from the other k-1 nodes as the next hop.

However, when the sending node sends a packet to a destination node, the sending node must first send a congestion detection packet, which causes delay in transmission; moreover, because a node in the above solution has only two states, congested and non-congested, and in a P2P overlay network, the topological state between nodes is unstable, which means the routing table changes dynamically, even after a congestion detection packet is sent, the overlay path may change due to changes in nodes so that the test result is not accurate.

In addition: the choice of backup resources in the existing multicast solution does not take into full account the actual processing capability of the chosen backup resource so that the chosen backup resource may fail to provide enough processing capabilities, which results in loss of information and affects the normal transport of multicast traffic.

US 2005/0091399 Al discloses a network of proxy servers overlaying a wide area network that comprises a plurality of autonomous systems establishes a hierarchical multicast tree overlay network structure for providing streaming live media from media sources to end users. The tree structure is constructed and maintained by peer-to-peer negotiations between proxy servers that identify proxy servers and data paths that optimize utilization of network resources based upon minimizing costs as a function of loadings. The proxy servers maintain information about the status of neighboring proxy servers, and exchange messages to redirect join requests to more suitable proxies, to redistribute portions of their own loads when they are overutilized, and to consolidate loads when they are underutilized.

US 2005/0102393 A1 provides techniques for adaptive load balancing. Techniques are provided for monitoring a server's operating conditions; determining, based on the server's operating conditions, when to send a behavior modification hint to one or more clients that are being served by the server; generating the behavior modification hint based on the server's operating conditions; and sending the behavior modification hint to the one or more clients. A client receives the behavior modification hint and, based on the behavior modification hint, alters a timeout value related to the server or alters its preferred server.

### Summary of the Invention

For the purpose of choosing a proper backup resource in a multicast group, the present invention provides a method and system for choosing backup resources. The technical solution is as follows:
As a first aspect of the invention a method for choosing backup resources includes:
   advertising, by a state advertising node, the busy level of the local node to other nodes in one multicast group; and
   choosing, by a backup resource choosing node, a proxy node according to the received busy levels of nodes,
wherein the step of advertising the busy level of the local node to other nodes in one multicast group comprises:
   by the state advertising node, checking the busy level of the local node and advertising its busy level to other nodes in the multicast group; and
   accordingly, the step of choosing the proxy node according to the received busy levels of nodes comprises:
      by the backup resource choosing node, judging whether it is in need of the proxy node upon reception of the busy level advertised by the state advertising node and if in need, choosing the proxy node according to the received busy levels of nodes, or if not in need, relaying the busy level to another node.

As a second aspect of the invention a system for choosing backup resources includes:
a state advertising node, adapted to check the busy level of the local node and advertise its busy level to other nodes in one multicast group; and
a backup resource choosing node, adapted to judge whether it is in need of the proxy node upon reception of the busy level advertised by the state advertising node and if in need, choose the proxy node according to the received busy levels of nodes, or if not in need, relay the busy level to another node.

The technical solution provides the following benefit:
With reference to the busy levels of other nodes, a node can choose a proper proxy node so that the choice is appropriate for resource backup.

### Brief Description of the Drawings

FIG. 1 shows a flowchart of a method for packet routing according to a first example which is not part of the present invention;
FIG. 2 compares routes from node A to node I according to the first example which is not part of the present invention;
FIG. 3 shows a flowchart of a method for packet routing according to a second example which is not part of the present invention;
FIG. 4 is a schematic drawing of a system for packet routing according to a third example which is not part of the present invention;
FIG. 5 shows the networking of a system for choosing backup resources according to a first embodiment of the present invention; and
FIG. 6 shows a system for choosing backup resources according to a second embodiment of the present invention.

### Detailed Description of the Embodiments

To make the technical solution, objectives and merits of the present invention clearer, the following describes the embodiments of the present invention in detail with reference to accompanying drawings.

In the embodiments of the present invention, the busy level of one node is set to multiple levels and is notified to other nodes. When a sending node sends a packet, the sending node chooses the route according to the busy levels of other nodes. This will prevent congestion in the network and achieve load balancing to some extent.

### First Example

The first example which is not part of the present invention provides a method for packet routing. The method includes: updating busy levels of nodes at preset intervals, where multiple busy levels are defined; choosing a packet receiving node according to a Distributed Hash Table (DHT) algorithms and the busy levels of nodes; and sending the packet to the chosen node.

The busy level of a node is preset according to the processing capability of the node. When necessary, multiple busy levels may be set. A node may measure the number of packets it receives in a certain period and determine its busy level according to the measurement result, its Central Processing Unit (CPU) state, its memory size, and network bandwidth. The determination may also make reference to the will of the node and other hardware performance indicators. Because the number of received packets is dynamic, the busy level of a node is also dynamic.

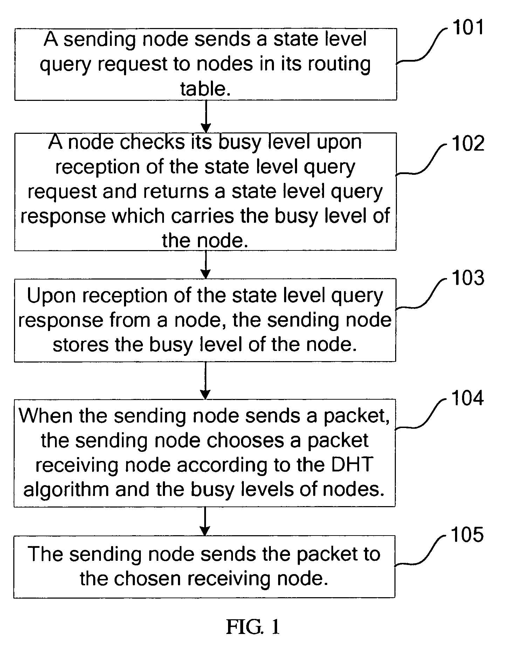

FIG. 1 shows a flowchart of a method for packet routing according to an example which is not part of the present invention. The method for packet routing includes the following steps:

Step 101: A sending node sends a state level query request to nodes in its routing table.

The state level query request may be a normal KeepAlive message or a user-defined message for the purpose of checking whether other nodes are online as well as their busy levels.

Step 102: Upon reception of the state level query request from the sending node, a node checks its current busy level and sends to the sending node a state level query response which carries the busy level of the node.

In this example, the state of a node is categorized into three busy levels:
Busy level 1: The node is idle and able to process (forward or terminate) all packets;
Busy level 2: The node is busy but not very busy and is able to process packets whose destination is in the key range of the node; and
Busy level 3: The node is very busy and able to process no subsequent packets, and packets destined for the node need to be processed by a proxy node of the node while packets not destined for the node will not be forwarded to the proxy node.

When the current busy level of the node is 1, the state level query response of the node carries busy level 1; when the current busy level of the node is 2, the state level query response of the node carries busy level 2 and its key space; when the current busy level of the node is 3, the state level query response sent by the node carries busy level 3, its key space, and the key of its proxy node.

If necessary, four busy levels may be set:
Busy level 1: The node is very idle and able to act as a proxy node of other nodes and process all packets;
Busy level 2: The node is idle and able to process all packets but unable to act as a proxy node of other nodes;
Busy level 3: The node is busy but not very busy and is able to process packets whose destination is in the key range of the node; and
Busy level 4: The node is very busy and able to process no subsequent packets, and packets destined for the node need to be processed by a proxy node of the node while packets not destined for the node will not be forwarded to the proxy node.

When the current busy level of the node is 1, the state level query response of the node carries busy level 1; when the current busy level of the node is 2, the state level query response of the node carries busy level 2; when the current busy level of the node is 3, the state level query response of the node carries busy level 3 and its key space; when the current busy level of the node is 4, the state level query response sent by the node carries busy level 4, its key space, and the key of its proxy node.

The states corresponding to the busy levels are relative. Taking the three busy levels as an example, the three busy levels can be measured by comparing the CPU occupancy, remaining bandwidth and free memory size. For example, in the case of a node with 1 GHz CPU, 256 MB memory and 500 kbps bandwidth, when the CPU occupancy rate is below or equal to 50%, and/or the free memory size is above or equal to 40 MB, and/or the free bandwidth is above or equal to 200 kbps, the node is at busy level 1; when the CPU occupancy rate is between 50% and 70%, and/or the free memory size is between 10 MB and 40 MB, and/or the free bandwidth is between 50 kbps and 200 kbps, the node is at busy level 2; and when the CPU occupancy rate is above or equal to 70%, and/or the free memory size is below or equal to 10 MB, and/or the free bandwidth is below or equal to 50 kbps, the node is at busy level 3. For other divisions of busy levels, the measurement of each level is alike. The numerical values here are exemplary only and other values and specific criteria may be adopted as well.

Step 103: Upon reception of the state level query response from the node, the sending node stores the current busy level of the node.

The current busy level of the node may be stored in a routing entry corresponding to the node in the routing table or in a user-defined table.

Step 104: When the sending node wishes to send a packet, the sending node chooses a node that receives the packet according to a predetermined policy with reference to the DHT algorithm and the busy levels of nodes.

The predetermined policy means the preset processing corresponding to each busy level, for example, sending to a node at busy level 2 only packets in its key range.

Step 105: The sending node sends the packet to the chosen receiving node.

The sending node determines the receiving node according to the busy levels of nodes in the routing table. Taking the three busy levels as an example, the specific processing is as follows:
(1) For a node at busy level 1, all packets can be sent to the node.
(2) For a node at busy level 2, only packets destined for a node in its key space are sent to the node.
(3) For a node at busy level 3, packets destined for a node in its key space are forwarded to its proxy node.

In the above method, the state level query response returned by a node to the sending node carries the busy level of the node. When the current state of the node approaches the processing limit of the node, the node may send a special message to notify the sending node so as to help the sending node choose an appropriate receiving node for subsequent packets according to the current state of the node.

The processing capability of a node may also impact the busy level of the node. For example, because of poor hardware performance of a node, the idlest state of the node may not be up to busy level 1 and is busy level 2 at most.

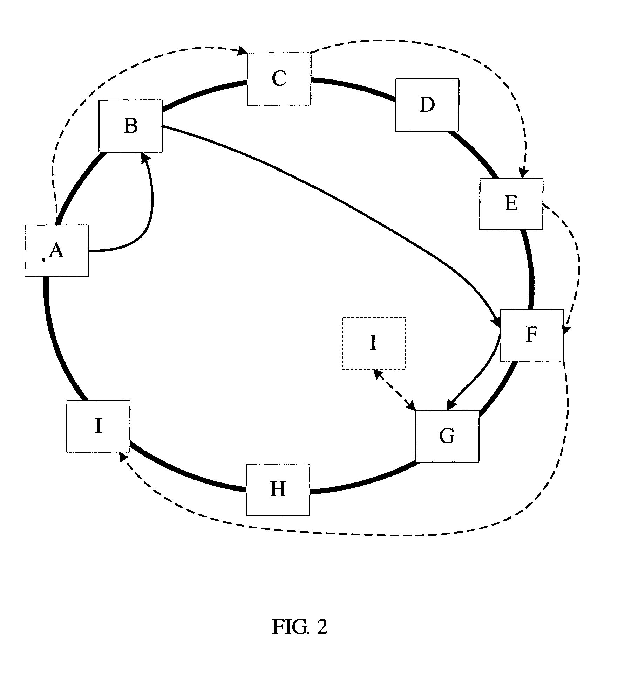

FIG. 2 compares the routes from node A to node I . Suppose the busy levels of nodes are stored in the routing table:
(1) Taking node A and node F as an example, when all nodes are idle, the routing table on node A is shown in Table 2 and the routing table on node F is shown in Table 3.

**Table 2**

| **Node ID** | **IP Address** | **Busy Level** |
|---|---|---|
| B | ××× | Busy level 1 |
| C | ××× | Busy level 1 |
| ... | ... | ... |

**Table 3**

| **Node ID** | **IP Address** | **Busy Level** |
|---|---|---|
| G | ××× | Busy level 1 |
| H | ××× | Busy level 1 |
| I | ××× | Busy level 1 |
| ... | ... | ... |

A packet is routed from node A to node I along the route A→C→E→F→I, as shown in the dashed lines in FIG. 2.
(2) When some nodes on the route are congested, for example, when node C, node G and node H are at busy level 2, and node I is at busy level 3, while the proxy node of node I is node G, the routing table on node A is shown in Table 4 and the routing table on node F is shown in Table 5.

**Table 4**

| **Node ID** | **IP Address** | **Busy Level** |
|---|---|---|
| B | ××× | Busy level 1 |
| C | ××× | Busy level 2 |
| ... | ... | ... |

**Table 5**

| **Node ID** | **IP Address** | **Busy Level** |
|---|---|---|
| G | ××× | Busy level 2 |
| H | ××× | Busy level 2 |
| I | ××× | Busy level 3 |
| ... | ... | ... |

In this case, when node A sends a packet to node I, node A checks the busy levels of nodes in the local routing table. When node A finds the busy level of node C is 2, node A sends the packet to node B. Node B forwards the packet to node F according to information in its local routing table. Node F checks its local routing table to find that node I is at busy level 3 and forwards the packet to the proxy node G of node I. Therefore, the route from node A to node I is A→B→F→G, as shown in the solid lines in FIG 2.

In this example, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### Second Example

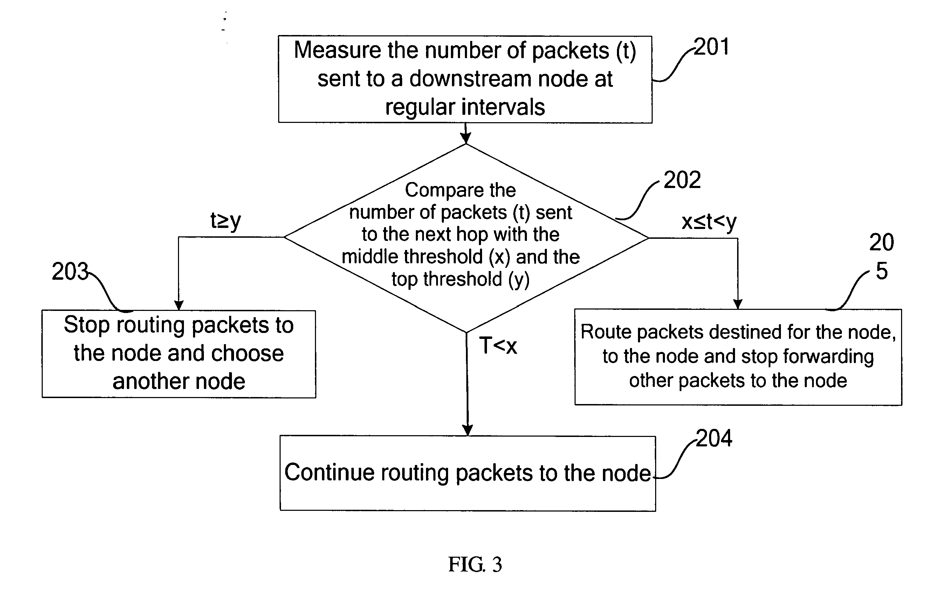

The second example of the present invention provides another method for packet routing. The sending node negotiates with a downstream node in advance about the top threshold and middle threshold of packets sent to the node in a given period. The downstream node will notify the sending node of its proxy node during the negotiation. The sending node records the negotiated top threshold and middle threshold and the corresponding proxy node. Such information may be written in corresponding entries in the routing table or another user-defined table. In this example, the information is recorded in the routing table for easy description. FIG. 3 shows a flowchart of a method for packet routing in this example which is not part of the present invention, including:

Step 201: Count the number of packets (t) sent to a downstream node at regular intervals.

Step 202: Search for the next-hop node in the routing table according to the DHT algorithm and compare the measured number of packets (t) sent to the next-hop node with the middle threshold x and the top threshold y. If t is above or equal to y, the process proceeds to step 203; if t is below x, the process proceeds to step 204; and if t is between x and y, the process proceeds to step 205.

Step 203: Stop routing packets to the node and choose another node.

Step 204: Continue routing packets to the node.

Step 205: Route packets destined for the node to the node and stop forwarding other packets to the node.

In this example, when the key range of a node changes, the node will notify its upstream node of the changed key range.

Still take the nodes shown in FIG. 2 as an example:
(1) The number of packets sent to node B measured by node A is between the middle threshold x and the top threshold y while the number of packets sent to another node is below x. Taking node A and node F as an example, the routing table on node A is shown in Table 6 and the routing table on node F is shown in Table 7.

**Table 6**

| **Node ID** | **IP Address** | **Middle Threshold (x)** | **Top Threshold (y)** | **Measurement (t)** |
|---|---|---|---|---|
| B | ××× | x(B) | y(B) | x(B)<t(B)<y(B) |
| C | ××× | x(C) | y(C) | t(C)<x(C) |
| ... | ... | ... | ... | ... |

**Table 7**

| **Node ID** | **IP Address** | **Middle Thresshold (x)** | **Top Threshold (y)** | **Measurement (t)** |
|---|---|---|---|---|
| G | ××× | x_{(G)} | y_{(G)} | t_{(G)}<x_{(G)} |
| H | ××× | x_{(H)} | y_{(H)} | t_{(H)}<x_{(H)} |
| I | ××× | x_{(I)} | y_{(I)} | t_{(I)}<x_{(I)} |
| ... | ... | ... | ... | ... |

A packet is routed from node A to node I along the route A→C→E→F→I, as shown in the dashed lines in FIG. 2.
(2) When some nodes are forwarding more packets, for example, when the measured number of packets sent to node C, node G and node H is between x and y and the number of packets sent to node I is above y, while the proxy node of node I is node G, the routing table on node A is shown in Table 8 and the routing table on node F is shown in Table 9.

**Table 8**

| **Node ID** | **IP Address** | **Middle Threshold (x)** | **Top Threshold (y)** | **Measurement (t)** |
|---|---|---|---|---|
| B | xxx | x_{(B)} | y_{(B)} | t_{(B)}<x_{(B)} |
| C | xxx | x_{(C)} | y_{(C)} | x_{(C)}<t_{(C)}<y_{(C)} |
| ... | ... | ... | ... | ... |

**Table 9**

| **Node ID** | **IP Adresse** | **Middle Threshold (X)** | **Top Threshold (y)** | **Measurement (t)** |
|---|---|---|---|---|
| G | ××× | x_{(G)} | y_{(G)} | x_{(G)}<t_{(G)}<y_{(G)} |
| H | ××× | x_{(H)} | y_{(H)} | x_{(H)}<t_{(H)}<y_{(H)} |
| I | ××× | x_{(I)} | y_{(I)} | t_{(I)}>y_{(I)} |
| ... | ... | ... | ... | ... |

In this case, when node A sends a packet to node I, node A measures the number of packets (t) sent to nodes in the local routing table within a certain period and finds that the number of packets sent to node C is between the middle threshold and the top threshold. Then node A sends the packet to node B. Node B forwards the packet to node F according to information in its local routing table. Node F checks its local routing table to find that the number of packets processed by node I has exceeded the top threshold and forwards the packet to the proxy node G of node I. Therefore, the route from node A to node I is A→B→F→G, as shown in the solid lines in FIG. 2.

In this example, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### Third Example

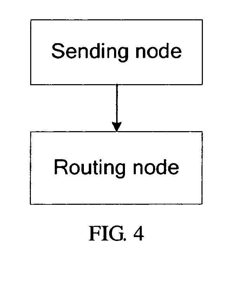

FIG. 4 is a schematic drawing of a system for packet routing according to the third example which is not part of the present invention. The system for packet routing includes:
a sending node, adapted to: update busy levels of nodes at predetermined intervals and choose a packet receiving node according to the DHT algorithm and the busy levels of nodes in its routing table, and send the packet to the chosen routing node; and
the routing node, adapted to: receive the packet from the sending node and choose a next-hop routing node according to the DHT algorithm and locally stored busy levels of other nodes.

The sending node includes:
a message sending module, adapted to send a state level query request to nodes in the local routing table at predetermined intervals;
a busy level updating module, adapted to: receive a state level query response and update the busy level of the corresponding node in the routing table according to the busy level carried in the state level query response; and
a packet sending module, adapted to: choose a packet receiving routing node according to the DHT algorithm and the busy levels of nodes in the routing table updated by the busy level updating module and send the packet to the chosen packet receiving routing node.

Further, the packet sending module includes:
a checking unit, adapted to: search for the next-hop routing node in the routing table according to the DHT algorithm, judge the busy level of the next-hop routing node, where busy levels include busy level 1 where all packets can be processed, busy level 2 where only packets within the key range of the next-hop node can be processed and busy level 3 where no packets can be processed; and if the busy level is 2 or 3, determine whether the destination of the packet is within the key range in the charge of the next-hop routing node; and
a packet sending unit, adapted to: send the packet to the next-hop node when the checking unit determines that the destination is within the key range in the charge of the next-hop node and the busy level of the next-hop node is 2; or when the busy level of the next-hop node is 3, send the packet to a proxy node of the next-hop node; or when the busy level of the next-hop node is 1, send any packet to the next-hop node.

Accordingly, the routing node includes:
a busy state checking module, adapted to check the busy state of the local node upon reception of a state level query request from the sending node;
a busy level determining module, adapted to determine a busy level according to the check result of the busy state checking module;
a message responding module, adapted to return to the sending node a state level query response which carries the busy level determined by the busy level determining module; and
a packet forwarding module, adapted to: receive the packet from the sending node and choose a next-hop routing node according to the DHT algorithm and locally stored busy levels of other nodes.

Alternatively, when the busy level of a downstream node is measured by the number of packets sent by the local node to the node, the sending node includes:
a measuring module, adapted to measure the number of packets sent by the local node to nodes in the local routing table at regular intervals;
a comparing module, adapted to compare the number of packets measured by the measuring module and a pre-negotiated top threshold and/or middle threshold;
a busy level updating module, adapted to update busy levels of nodes according to the comparison result of the comparing module; and
a packet sending module, adapted to: choose a packet receiving node according to the DHT algorithm and the busy levels of nodes updated by the busy level updating module and send the packet to the chosen packet receiving node.

Further, the packet sending module includes:
a checking unit, adapted to: search for the next-hop node in the routing table according to the DHT algorithm, check the number of packets sent by the local node to the next-hop node, and if the number of packets is above or equal to the middle threshold, judge whether the destination of the packet is within the key range in the charge of the next-hop node; and
a packet sending unit, adapted to: send the packet to the next-hop node when the checking unit determines that the destination is within the key range in the charge of the next-hop node and the number of packets is between the middle threshold and the top threshold; or when the number of packets is above or equal to the top threshold, send the packet to the proxy node of the next-hop node; or when the number of packets is below the middle threshold, send any packet to the next-hop node.

Accordingly, the routing node is adapted to: receive the packet from the sending node and choose a next-hop routing node according to the DHT algorithm and locally stored busy levels of other nodes.

In this example, a node chooses a packet receiving node with reference to the busy levels of nodes in its routing table so as to balance the loads among the nodes and avoid the happening of network congestion. In addition, the destination of the packet is fully considered so that the packet to be processed by a node is sent to the node with best efforts.

### First Embodiment

The first embodiment of the present invention provides a method for choosing backup resources. The method includes: a state advertising node advertises its busy level to other nodes within a multicast group; and a backup resource choosing node chooses a proxy node according to the received busy levels of nodes.

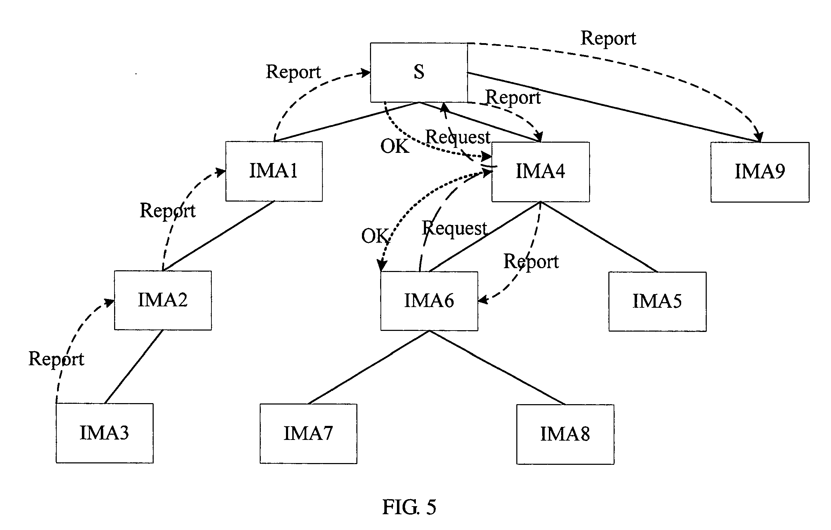

FIG. 5 shows the network structure provided in the embodiment of the present invention. In the case that an IPTV Multicast Agent (IMA3) advertises its busy level, the process of choosing a backup resource in an application layer multicast group is as follows:
1. The IMA3 checks resources (bandwidth, CPU processing capability and storage space) available for the local node, determines its busy level according to the available resources, and advertises its busy level via a Report message for reference of other nodes so that other nodes may decide whether to choose the IMA3 as a proxy node, or a backup resource.
2. When the Report message is delivered upward, every passed node judges whether any other branch is in need of the IMA3 to act as a proxy node and if in need, relays the Report message to the branch in need and marks itself as a backup request processing node. If no other branch is in need of the IMA3 to act as a proxy node, the node continues delivering the Report message upward until the Report message arrives at the data source node S.
3. The data source node S detects another branch of the local node is in need of the backup resource, and therefore relays the Report message to the branch and marks the local node as a backup request processing node.
4. When a child node in the branch of the data source node S receives the Report message, the child node makes a choice according to its need, and when it is not in need, continues delivering the Report message to its downstream node, or when it is in need, chooses the IMA3 as its backup resource without relaying the Report message to its downstream node.
5. When a node in the branch chooses the IMA3 as its backup resource, the node sends a Backup Req to the data source node S and S responds to the backup requesting nodes with an OK or failure message according to the first-come-first-served principle.
6. The node that receives the OK message takes the IMA3 as its proxy node and nodes receiving the failure response will not forward the failure message.

For example, the IMA6 chooses the IMA3 as its backup resource and notifies the data source node S of the choice via a Backup Req and the data source node S returns an OK message in response to the Backup Req. Upon reception of the OK, the IMA6 regards the IMA3 as its proxy node.

In this embodiment, a node chooses an appropriate node as its proxy node with reference to the busy levels (processing capabilities) of other nodes, so that the chosen node is appropriate and able to fulfill resource backup.

### Second Embodiment

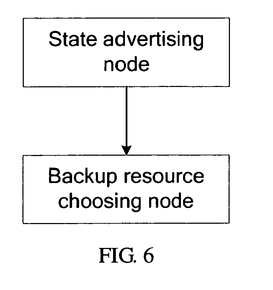

FIG. 6 shows a system for choosing backup resources according to the second embodiment of the present invention. The system includes:
a state advertising node, adapted to broadcast the busy level of the local node to other nodes in one multicast group; and
a backup resource choosing node, adapted to choose a proxy node according to the received busy levels advertised by state advertising nodes.

In the technical solution of the first and second embodiments, in a multicast group, a node chooses an appropriate node as its proxy node with reference to the busy levels (processing capabilities) of other nodes, so that the chosen node is appropriate and able to fulfill resource backup.

The software corresponding to the technical solution provided in the embodiments of the present invention may be stored in a computer readable storage medium such as a computer hard disk or a compact disk.

In the embodiments, a node chooses an appropriate node as its proxy node with reference to the busy levels (processing capabilities) of other nodes, so that the chosen node is appropriate and able to fulfill resource backup.

Although the invention has been described through several exemplary embodiments, the invention is not limited to such embodiments. It is apparent that those skilled in the art can make various modifications and variations to the invention.

## Claims

1. A method for choosing backup resources, comprising:
advertising, by a state advertising node, the busy level of the local node to other nodes in one multicast group; and
choosing, by a backup resource choosing node, a proxy node according to the received busy levels of nodes;
wherein the step of advertising the busy level of the local node to other nodes in one multicast group comprises:
by the state advertising node, checking the busy level of the local node and advertising its busy level to other nodes in the multicast group;
the method **characterized in that**
accordingly, the step of choosing the proxy node according to the received busy levels of nodes comprises:
by the backup resource choosing node, judging whether it is in need of the proxy node upon reception of the busy level advertised by the state advertising node and if in need, choosing the proxy node according to the received busy levels of nodes, or if not in need, relaying the busy level to another node.

2. A system for choosing backup resources, comprising:
a state advertising node, adapted to check the busy level of the local node and advertise its busy level to other nodes in one multicast group; and
a backup resource choosing node, adapted to judge whether it is in need of the proxy node upon reception of the busy level advertised by the state advertising node and if in need, choose the proxy node according to the received busy levels of nodes, or if not in need, relay the busy level to another node.

## Patentansprüche

1. Verfahren zum Wählen von Backup-Betriebsmitteln, mit den folgenden Schritten:
ein Zustandsankündigungsknoten kündigt anderen Knoten in einer Multicast-Gruppe den Beschäftigtheitsgrad des lokalen Knotens an; und
ein Backup-Betriebsmittelwählknoten wählt einen Proxy-Knoten gemäß den empfangenen Beschäftigtheitsgraden von Knoten;
wobei der Schritt, anderen Knoten in einer Multicast-Gruppe den Beschäftigtheitsgrad des lokalen Knotens anzukündigen, Folgendes umfasst:
der Zustandsankündigungsknoten prüft den Beschäftigtheitsgrad des lokalen Knotens und kündigt seinen Beschäftigtheitsgrad anderen Knoten in der Multicast-Gruppe an;
wobei das Verfahren **dadurch gekennzeichnet ist, dass**
entsprechend der Schritt des Wählens des Proxy-Knotens gemäß den empfangenen Beschäftigtheitsgraden von Knoten Folgendes umfasst:
der Backup-Betriebsmittelwählknoten beurteilt, ob er den Proxy-Knoten benötigt, bei Empfang des durch den Zustandsankündigungsknoten angekündigten Beschäftigtheitsgrads, und wählt bei Bedarf den Proxy-Knoten gemäß den empfangenen Beschäftigtheitsgraden von Knoten oder leitet bei keinem Bedarf den Beschäftigtheitsgrad zu einem anderen Knoten weiter.

2. System zum Wählen von Backup-Betriebsmitteln, umfassend:
einen Zustandsankündigungsknoten, der dafür ausgelegt ist, den Beschäftigtheitsgrad des lokalen Knotens zu prüfen und seinen Beschäftigtheitsgrad anderen Knoten in einer Multicast-Gruppe anzukündigen,
einen Backup-Betriebsmittelwählknoten, der dafür ausgelegt ist, bei Empfang des durch den Zustandsankündigungsknoten angekündigten Beschäftigtheitsgrads zu beurteilen, ob er den Proxy-Knoten benötigt, und bei Bedarf den Proxy-Knoten gemäß den empfangenen Beschäftigtheitsgraden von Knoten zu wählen oder bei keinem Bedarf den Beschäftigtheitsgrad zu einem anderen Knoten weiterzuleiten.

## Revendications

1. Procédé de sélection de ressources de sauvegarde, comportant les étapes consistant à :
faire annoncer, par un noeud d'annonce d'état, le niveau d'occupation du noeud local à d'autres noeuds dans un même groupe de multidiffusion ; et
faire sélectionner, par un noeud de sélection de ressources de sauvegarde, un noeud mandataire en fonction des niveaux d'occupation reçus de noeuds ;
l'étape d'annonce du niveau d'occupation du noeud local à d'autres noeuds d'un même groupe de multidiffusion comportant les étapes consistant à :
faire vérifier, par le noeud d'annonce d'état, le niveau d'occupation du noeud local et annoncer son niveau d'occupation à d'autres noeuds du groupe de multidiffusion ;
le procédé étant **caractérisé en ce que**, en conséquence, l'étape de sélection du noeud mandataire en fonction des niveaux d'occupation reçus de noeuds comporte les étapes consistant à :
faire déterminer, par le noeud de sélection de ressources de sauvegarde, s'il a besoin du noeud mandataire suite à la réception du niveau d'occupation annoncé par le noeud d'annonce d'état et, s'il en a besoin, sélectionner le noeud mandataire en fonction des niveaux d'occupation reçus de noeuds ou, s'il n'en a pas besoin, relayer le niveau d'occupation à un autre noeud.

2. Système de sélection de ressources de sauvegarde, comportant :
un noeud d'annonce d'état, prévu pour vérifier le niveau d'occupation du noeud local et annoncer son niveau d'occupation à d'autres noeuds d'un même groupe de multidiffusion ; et
un noeud de sélection de ressources de sauvegarde, prévu pour déterminer s'il a besoin du noeud mandataire suite à la réception du niveau d'occupation annoncé par le noeud d'annonce d'état et, s'il en a besoin, sélectionner le noeud mandataire en fonction des niveaux d'occupation reçus de noeuds ou, s'il n'en a pas besoin, relayer le niveau d'occupation à un autre noeud.
